# NEUE EUROPÄISCHE PATENTSCHRIFT

(11) **EP 2 216 306 B2**
(45) Veröffentlichungstag und Bekanntmachung des Hinweises auf die Entscheidung über den Einspruch: **02.06.2021**
(45) Hinweis auf die Patenterteilung: 19.08.2015
(21) Anmeldenummer: 10152699.4
(22) Anmeldetag: 04.02.2010
(51) Int. Cl.: C04B 28/02, C04B 26/02, C09D 1/04, E04F 13/00, C09D 5/02, C04B 28/10

(54) **VISKOSE, KORNHALTIGE AUSHÄRTENDE BESCHICHTUNGSMASSE**
Viscous, granular, hardening coating mass
Masse de revêtement visqueuse, granuleuse, durcissante

(30) Priorität: 06.02.2009 DE 102009007911
(43) Veröffentlichungstag der Anmeldung: 11.08.2010
(73) Patentinhaber: STO SE & Co. KGaA, 79780 Stühlingen (DE)
(72) Erfinder: Böhler, Joachim, 79848 Bonndorf (DE); Dunklau, Günter, 25761 Büsum (DE); Holder, Theresia, 79761 Tiengen (DE)
(74) Vertreter: Gottschalk, Matthias

(56) Entgegenhaltungen:
- EP-A1- 0 230 220
- EP-A1- 1 593 659
- EP-A2- 1 643 046
- WO-A1-2004/087821
- WO-A1-2013/078949
- WO-A2-02/058841
- DE-A1- 4 324 314
- DE-A1- 4 324 315
- DE-A1-102008 004 844
- DE-C1- 19 910 602
- US-A- 4 735 027
- G. HERDAN: "Particle size and other characteristics" In: "Small Particle Statistics", pages 256-270,
- T. ALLEN: "Particle Size, Shape and Distribution" In: "Particle Size Measurement", London (D3) pages 74-76,84-93,
- "technisches Datenblatt Arbocel FIC200", J. Rettenmaier, Retrieved from the Internet: URL:http://www.grupofiltrantes.com.mx/web/ images/FichaTecnica/ARBOCELFIC200.pdf

## Beschreibung

Die Erfindung betrifft eine viskose, kornhaltige aushärtende Beschichtungsmasse zum maschinellen Auftragen auf einen Untergrund, insbesondere auf eine bauseits angebrachte Trägerplatte wie beispielsweise eine Wärmedämmplatte zur Herstellung eines Wärmedämmverbundsystems. Ferner betrifft die Erfindung die Verwendung einer solchen Beschichtungsmasse zur Beschichtung eines Untergrundes, insbesondere einer bauseits angebrachten Trägerplatte wie beispielsweise einer Wärmedämmplatte zur Herstellung eines Wärmedämmverbundsystems, sowie ein Wärmedämmverbundsystem umfassend eine solche Beschichtungsmasse.

Der übliche Aufbau eines Wärmedämmverbundsystems umfasst eine aus Wärmedämmplatten bestehende Dämmschicht sowie eine hierauf aufgebrachte Putzschicht, die wiederum aus einem bewehrten Grundputz sowie einer dekorativen Deckschicht besteht. Zur Ausbildung des bewehrten Grundputzes, d.h. der Armierungsschicht, finden in der Regel Beschichtungsmassen Verwendung, die mittels eines Spritz- oder Sprühverfahrens auftragbar sind. Der Einsatz eines solchen Verfahrens erfordert, dass die aufzutragende Masse eine ausreichende Viskosität aufweist. Nach dem Auftragen härtet die Beschichtungsmasse aus und bildet eine starre Putzschicht. Die regelmäßig beim Aushärten der Beschichtungsmasse schwindungsbedingt innerhalb der Putzschicht auftretenden Spannungen werden dabei von einem in die Armierungsschicht eingelegten Armierungsgewebe aufgenommen. Das Armierungsgewebe soll ferner die Bildung von Rissen aufgrund hygrothermischer Spannungen innerhalb der Putzschicht verhindern.

Bei den aus dem Stand der Technik bekannten Beschichtungsmassen zur Ausbildung einer Armierungsschicht handelt es sich in der Regel um schnell abbindende, zementhaltige Zusammensetzungen oder um organisch gebundene Massen. Um eine ausreichende Viskosität für den maschinellen Austrag sicherzustellen, wird die Zusammensetzung in der Regel mit Wasser versetzt. Die Zusammensetzung enthält darüber hinaus Füllstoffe, wie beispielsweise Sande, feinkörnige Kiese und dergleichen, die durch das Bindemittel-Wasser-Gemisch gebunden werden. Ferner können die Zusammensetzungen Additive enthalten, mittels derer die Verarbeitungseigenschaften der Zusammensetzung einstellbar sind. Derartige Additive können beispielsweise je nach Bedarf Härtungsbeschleuniger oder -verzögerer, Dispergiermittel, Filmbildner, Verdicker oder dergleichen sein.

Eine derartige Beschichtungsmasse ist beispielhaft in der DE 199 10 602 C1 offenbart.

Aus der EP 0 230 220 A1 geht ferner ein organisch gebundenes Beschichtungsmaterial für Baustoffe hervor, das zur Begrenzung der Schadstoffbelastung frei von Lösungsmitteln oder flüchtigen Bestandteilen ist. Das Beschichtungsmaterial findet bevorzugt Einsatz als Dispersionslackfarbe.

Die Wahl der Additive hängt unter anderem von dem jeweils bevorzugten Auftragsverfahren ab.

Bei Einsatz eines Sprüh- oder Spritzverfahrens zum Auftragen der Beschichtungsmasse wird in der Regel Druckluft zum Fördern und Austragen der Beschichtungsmasse eingesetzt. Dabei sind die Viskosität der Masse und der zum Fördern und Austragen erforderliche Druck derart einzustellen, dass die aufgesprühte oder aufgespritzte Beschichtungsmasse am zu beschichtenden Untergrund haften bleibt. Die optimale Einstellung ist jedoch schwierig, so dass in der Regel nicht unerhebliche Materialverluste hingenommen werden müssen. Insbesondere bei elastischen Untergründen, wie beispielsweise einer Wärmedämmplatte aus Polystyrol, tritt der sogenannte Rückprall-Effekt auf, der unter anderem zu hohen Materialverlusten beiträgt. Das Aufsprühen oder Aufspritzen mittels Druckluft geht zudem oftmals mit starken Vernebelungen oder Verwirbelungen einher, so dass angrenzende Bauteile und die Umgebung vor unerwünschten Verschmutzungen geschützt werden müssen.

Die vorstehend genannten Probleme treten in der Regel nicht oder zumindest in wesentlich geringerem Maße auf, wenn die Beschichtungsmasse maschinell oder manuell in Form einer Wulst aufgetragen wird, wobei das als Wulst aufgetragene Material nachträglich manuell abgezogen bzw. geglättet werden muss, um es gleichmäßig auf dem Untergrund zu verteilen. Ein derartiges Auftragsverfahren ist daher zeit- und kostenintensiv.

Es sind darüber hinaus Verfahren bekannt, die ein druckluftlos zerstäubendes Aufspritzen (Airless-Spritzen) wässriger Zusammensetzungen auf einen Untergrund unter Zuhilfenahme spezieller Spritzvorrichtungen ermöglichen. Eine solche Vorrichtung wird beispielsweise in der DE 20 2005 012 773 U1 beschrieben und dient dem Auftragen einer wässrigen Bautenfarbe- bzw. Anstrichzusammensetzung, die ein Bindemittelpolymer, ein Verdickungsmittel und Bestandteile wie Pigmente, Farbstoffe, deckende Zusätze und /oder Füllstoffe enthält. Über einen handbetriebenen Kompressor wird ein Druck von 2,5 bis 5 bar erzeugt, der ein druckluftloses Verspritzten der Anstrichzusammensetzung ermöglichen soll.

Das Airless-Spritzen weist gegenüber Druckluft einsetzenden Auftragsverfahren insbesondere den Vorteil auf, dass der Sprühstrahl besser fokussierbar ist. Dadurch können Vernebelungen oder Verwirbelungen weitestgehend vermieden werden. Demzufolge sind zusätzliche Schutzmaßnahmen zum Schutz angrenzender Bauteile und/oder der Umgebung vor Verschmutzungen oftmals entbehrlich. Das Airless-Spritzen hilft somit Zeit und Kosten zu sparen. Da beim Airless-Spritzen kein Luft-Begleitstrom benötigt wird, können zudem einfach aufgebaute Vorrichtungen ohne Druckluftanschluss zum Spritzen verwendet werden. Die in der DE 20 2005 012 773 U1 beschriebene Vorrichtung beispielsweise weist einen einfachen handbetriebenen Kompressor auf, mit welchem Materialdrücke bis 5 bar erzielbar sind. Diese Vorrichtung ist daher insbesondere für den Do-it-yourself-Bereich sowie für den Farbauftrag im Innenbereich geeignet.

Eine vergleichbare Vorrichtung wird in der EP 1 593 659 A1 zum Auftragen einer mineralische Füllstoffe enthaltenden Beschichtungszusammensetzung beschrieben. Der mittlere Korndurchmesser der enthaltenen mineralischen Füllstoffe beträgt maximal 20 Mikrometer, damit die Zusammensetzung mit dem Airless-Gerät gepumpt werden kann.

Das Auftragen herkömmlicher, aus dem Stand der Technik bekannter kornhaltiger Beschichtungsmassen, wie sie beispielsweise in der US 4 735 027 A zur Herstellung einer Putzschicht offenbart werden, ist unter Zuhilfenahme einer Vorrichtung, wie sie vorstehend beschrieben wurde, jedoch nicht möglich. Denn der Kornanteil würde zu einer verstärkten Abrasion im Düsenbereich der Spritzvorrichtung, wenn nicht sogar zum Verstopfen der Düse führen. Die hohe kinetische Energie des Kornanteils würde zudem zu einer Verstärkung des Rückprall-Effektes führen, wodurch die Vorteile des Airless-Spritzens wieder zunichte gemacht würden.

Aufgabe der Erfindung ist es daher, eine viskose, kornhaltige aushärtende Beschichtungsmasse bereitzustellen, die aufgrund ihrer Zusammensetzung einfach, schnell und sauber zu verarbeiten ist und die insbesondere maschinell auf einen zu beschichtenden Untergrund auftragbar ist. Ferner soll eine Beschichtungsmasse angegeben werden, deren Zusammensetzung den Einsatz eines druckluftlos zerstäubenden Spritzverfahrens zum Auftragen der Beschichtungsmasse ermöglicht. Des Weiteren ist es Aufgabe der Erfindung eine Beschichtungsmasse für eine einfache und kostengünstige Beschichtung eines Untergrundes, beispielsweise zur Herstellung eines Fassadensystems, insbesondere eines Wärmedämmverbundsystems, bereitzustellen. Weiterhin soll die Beschichtungsmasse zur Ausbildung einer ein- oder mehrschichtigen Putzschicht geeignet sein.

Die Aufgaben werden gelöst durch eine Beschichtungsmasse mit den Merkmalen des Anspruchs 1, durch die in Anspruch 6 vorgeschlagene Verwendung einer solchen Beschichtungsmasse sowie einem Wärmedämmverbundsystem mit den Merkmalen des Anspruchs 7. Vorteilhafte Weiterbildungen der erfindungsgemäßen Beschichtungsmasse werden in den übrigen, auf Anspruch 1 direkt oder indirekt rückbezogenen Unteransprüchen beschrieben.

Erfindungsgemäß weist die Beschichtungsmasse eine Zusammensetzung auf, die

| | |
|---|---|
| 30 bis 75 Massen% | Füllstoffe, wie beispielsweise Karbonate, Magnesiumhydrosilikate, Schichtsilikate und/oder Bariumsulfate, in einer Kornverteilung mit einer maximalen Korngröße ≤250 µm, weiterhin vorzugsweise ≤150 µm, |
| 5 - 30 Massen% | organische und/oder anorganische Bindemittel, wie beispielsweise Polymerdispersion, Dispersionspulver, Zement, Wasserglas und/oder Kalkhydrat, |
| 5 - 45 Massen% | Wasser, |
| 0,3 - 25 Massen% | verschiedener Additive, wie beispielsweise Filmbildner, Entschäumer, Thixotropier-, Hydrophobierungs-, Netz-, Flammschutz- und/oder Konservierungsmittel sowie |
| ≤ 4 Massen% | organische und/oder anorganische Verstärkungsfasern, wie beispielsweise Zellulosefasern und/oder Glasfilamente |

umfasst, so dass die Beschichtungsmasse über ein druckluftlos zerstäubendes Spritzverfahren austragbar ist.

Aufgrund der angegebenen maximalen Korngröße der in der Zusammensetzung enthaltenden Füllstoffe, sind keine Bestandteile enthalten, die zu einem vorzeitigen Verschleiß der zum druckluftlosen Austrag erforderlichen Düse beitragen würden. Weiterhin wird die Gefahr des Verstopfens der Düse beseitigt, da die maximale Korn- bzw. Partikelgröße auf den Durchmesser der Düsenöffnung abgestimmt ist. Ein weiterer Vorteil besteht darin, dass zum Auftragen der erfindungsgemäßen Beschichtungsmasse eine einfache druckerzeugende Vorrichtung, wie beispielsweise eine Pumpe, einsetzbar ist, die keinen Druckluftanschluss erfordert. Mittels einer solchen Vorrichtung ist ein Materialdruck erzielbar, der bewirkt, dass die Beschichtungsmasse an der Düsenöffnung zerfällt und zerstäubend verspritzt wird. Dabei ist der Sprühstrahl derart fokussierbar, dass es kaum zu Vernebelungen oder Verwirbelungen kommt. Das ausgetragene Material bleibt zudem gut an der zu beschichtenden Bauteiloberfläche haften, denn das in der erfindungsgemäßen Beschichtungsmasse enthaltene Feinkorn weist gegenüber dem in einer herkömmlichen Masse enthaltenen Grobkorn eine geringere kinetische Energie auf, so dass Rückprallverluste gemindert werden. Es kann somit materialschonend gearbeitet werden und zusätzliche Maßnahmen zum Schutz der angrenzenden Bauteile und der Umgebung vor Verschmutzungen können entfallen.

Die angegebene erfindungsgemäße Beschichtungsmasse lässt sich jedoch auch unter Zuhilfenahme konventioneller Auftragsverfahren sehr gut verarbeiten. Das heißt, die erfindungsgemäße Beschichtungsmasse ist sowohl maschinell mittels Druckluft oder manuell mittels eines hierfür vorgesehenen Auftragswerkzeuges, wie beispielsweise einer Kelle oder Traufel, auf einen zu beschichtenden Untergrund auftragbar. Der feinkörnigen Zusammensetzung ist es zu verdanken, dass sie sich im Vergleich zu herkömmlichen Beschichtungsmassen leicht auftragen und verteilen lässt, so dass ein gleichmäßiger Flächenauftrag gewährleistet ist. Der Einsatz eines druckluftlos zerstäubenden Auftragsverfahrens zum Auftragen der erfindungsgemäßen Beschichtungsmasse ist demnach nicht zwingend erforderlich. Die wesentlichen Vorteile kommen auch bei Einsatz konventioneller Auftragsverfahren zum Tragen.

Bei herkömmlichen grobkörnigen Beschichtungsmassen dient der Größtkornanteil in der Regel der Einstellung einer bestimmten Mindestschichtstärke. Der Größtkorndurchmesser ist daher auf die zu erzielende Mindestschichtstärke abgestimmt. Beim manuellen Abziehen der aufgetragenen Masse, beispielsweise mittels einer Traufel oder einer Kelle, dient das enthaltene Größtkorn dann als Führungskorn, so dass die Einstellung einer Mindestschichtstärke gewährleistet ist. Bei der sehr feinkörnigen erfindungsgemäßen Beschichtungsmasse ist je nach geforderter Mindestschichtstärke- ein als Führungskorn dienender Kornanteil in der Regel nicht enthalten. Um die Einstellung einer Mindestschichtstärke zu gewährleisten müssen daher gegebenenfalls zusätzliche Maßnahmen getroffen werden. Soll die Beschichtungsmasse zur Herstellung einer Armierungsschicht verwendet werden, kann beispielsweise ein als Abstandhalter dienendes Armierungsgewebe in die aufgetragene Beschichtungsmasse eingelegt und darüber die Beschichtungsmasse in der entsprechenden Schichtstärke abgezogen werden.

In der angegebenen Zusammensetzung und insbesondere in Kombination mit einem Armierungsgewebe eignet sich die erfindungsgemäße Beschichtungsmasse daher insbesondere zur Herstellung einer ggf. in unterschiedlichen Schichtstärken und/oder mehreren Arbeitsschritten aufgetragenen Armierungsschicht. Zur Herstellung einer solchen Armierungsschicht wird ein Armierungsgewebe in die aufgetragene Beschichtungsmasse eingelegt bzw. eingedrückt. Insbesondere eignet sich die Beschichtungsmasse somit zur Ausbildung einer auf einer Dämmschicht zur Herstellung eines Wärmedämmverbundsystems aufgetragenen Armierungsschicht. Die Zusammensetzung der erfindungsgemäßen Beschichtungsmasse ermöglicht des Weiteren einen besonders dünnschichtigen Auftrag, beispielsweise zur Herstellung einer Haftbrücke oder einer Kleberschicht, die ggf. vor dem Auftrag einer weiteren, beispielsweise einer als Armierungsschicht dienenden Putzschicht auf den zu beschichtenden Untergrund aufgetragen wird.

Soll ein Auftrag in unterschiedlichen Schichtstärken und/oder in mehreren Arbeitsschritten erfolgen, beispielsweise zur Ausbildung einer ersten, insbesondere als Haftbücke dienenden Schicht sowie einer darauffolgenden zweiten, insbesondere als Putz- und/oder Armierungsschicht dienenden Schicht, wird zur Ausbildung der wenigstens zwei aufeinanderfolgenden Schichten die Beschichtungsmasse bevorzugt nass in nass verarbeitet. Der Auftrag der Beschichtungsmasse zur Ausbildung einer Folgeschicht erfolgt somit vor dem vollständigen Aushärten der jeweils vorhergehenden Schicht. Im Falle der Ausbildung einer ersten dünnen, beispielsweise als Haftbrücke dienenden Schicht und einer darauffolgenden weiteren, beispielsweise als Armierungsschicht dienenden Schicht wird die weitere Schicht vorzugsweise gleich im Anschluss aufgetragen. Gegebenenfalls ist hierzu ein Werkzeugwechsel erforderlich. Die Verarbeitung nass in nass bewirkt einen hervorragenden Stoffverbund, so dass die Haftung der wenigstens einen nachfolgenden Schicht auf dem Untergrund, der eine Trägerplatte, beispielsweise eine Wärmedämmplatte, insbesondere eine Polystyrol-Wärmedämmplatte, umfassen kann, verbessert wird.

Um einen besonders dünnschichtigen Auftrag der Beschichtungsmasse, beispielsweise als Haftbrücke, zu ermöglichen, kann beim maschinellen Auftrag eine auf die Zusammensetzung und insbesondere die Kornverteilung der Beschichtungsmasse abgestimmte Düse verwendet werden. Die Ausbildung nachfolgender Schichten kann dann gegebenenfalls einen Düsenwechsel erfordern. Aufgrund der erfindungsgemäßen Formulierung ist die Beschichtungsmasse zur Ausbildung von Schichtstärken unter 1,0 mm, sogar deutlich unter 1,0 mm, das heißt im Mikrometer-Bereich, beispielsweise zur Ausbildung einer Haftbrücke, geeignet. Bevorzugt ist die erfindungsgemäße Beschichtungsmasse zudem zur Ausbildung einer ein- oder mehrschichtigen Beschichtung in einer Gesamtschichtstärke von ≥1,0 mm, vorzugsweise ≥1,5 mm geeignet.

Um den Einsatz eines druckluftlos zerstäubenden Spritzverfahrens zu ermöglichen, ist die Beschichtungsmasse vorzugsweise bei einem Maschinendruck von 80 bis 250 bar austragbar. Der Druck wird bevorzugt unter Zuhilfenahme einer Pumpe, beispielsweise einer elektrisch, pneumatisch oder mittels eines Verbrennungsmotors betriebenen Pumpe, erreicht. Der Verzicht auf den Einsatz von Druckluft hat den Vorteil, dass ungünstige Vernebelungen oder Verwirbelungen deutlich verringert werden.

Die in der erfindungsgemäßen Zusammensetzung enthaltenen Verstärkungsfasern weisen Abmessungen auf, die ebenfalls auf die zu verwendeten Düsen abgestimmt sind. Somit ist weiterhin sichergestellt, dass die Düsen nicht verstopfen. Erfindungsgemäss werden Zellulosefasern mit einer Faserdicke von 2 bis 50 µm und einer maximalen Faserlänge ≤2000 µm, vorzugsweise ≤1000 µm, verwendet. Werden statt Zellulosefasern andere Fasern eingesetzt, sind deren Abmessungen entsprechend zu wählen. Sind alternativ oder ergänzend Glasfilamente in der Beschichtungsmasse als Verstärkungsfasern enthalten, weisen diese eine Schnittlänge von 1 bis 10 mm, vorzugsweise 4 bis 7 mm auf.

Eine erfindungsgemäße Formulierung kann beispielsweise die folgende Zusammensetzung aufweisen:

| | |
|---|---|
| 17,0 % | Wasser |
| 1,8 % | Rheologie Additive |
| 1,1 % | Filmbildehilfsmittel |
| 1,7 % | Verstärkungsfasern |
| 0,4 % | Netzmittel |
| 25,0 % | Kopolymerdispersion |
| 1,0 % | Hydrophobierungsmittel |
| 0,1 % | Entschäumer |
| 4,0 % | Magnesiumhydrosilikat |
| 8,0 % | Flammschutzmittel |
| 39,8 % | Calciumkarbonat |
| 0,1 % | Topfkonservierer |

Versuche mit einer derartigen Zusammensetzung haben gezeigt, dass sich eine solche Beschichtungsmasse hervorragend mittels eines druckluftlos zerstäubenden Spritzverfahrens austragen lässt, wobei der zum Austrag erforderliche Druck allein über den Materialdruck bewirkt wird. Zur Druckerzeugung wurde vorliegend eine Pumpe der J. Wagner GmbH eingesetzt. Aber auch bei Einsatz konventioneller Auftragsverfahren lässt sich die erfindungsgemäße Beschichtungsmasse einfach, schnell und sauber auf einen zu beschichtenden Untergrund auftragen.

Anstelle eines organischen Bindemittels entsprechend der vorstehend genannten Zusammensetzung kann die Beschichtungsmasse auch ein anorganisches bzw. mineralisches Bindemittel, wie beispielsweise Zement, Wasserglas oder Kalkhydrat, umfassen.

Da sich die erfindungsgemäße Beschichtungsmasse hervorragend zur Ausbildung einer in unterschiedlichen Schichtstärken und/oder in mehreren Arbeitsschritten, beispielsweise auf einer Wärmedämmplatte zur Herstellung eines Wärmedämmverbundsystems aufgetragenen Armierungsschicht eignet, wird vorliegend auch die Verwendung einer solchen Beschichtungsmasse zur Beschichtung eines Untergrundes, vorzugsweise einer bauseits angebrachten Trägerplatte, insbesondere einer Wärmedämmplatte, beispielsweise einer Wärmedämmplatte aus Polystyrol, insbesondere aus elastifiziertem Polystyrol, zur Herstellung eines Fassadensystems, wie beispielsweise eines Wärmedämmverbundsystems, beansprucht. Bei der Beschichtung von Wärmedämmplatten, wie beispielsweise Polystyrolplatten, die ein elastisches Verhalten zeigen, kommen die Vorteile der erfindungsgemäßen Beschichtungsmasse besonders gut zum Tragen. Denn die feinkörnige Zusammensetzung hilft insbesondere bei elastischen Untergründen Rückprallverluste zu vermeiden, so dass zusätzliche Maßnahmen zum Schutz angrenzender Bauteile und/oder der Umgebung in der Regel entbehrlich sind. Dadurch kann Zeit und Geld gespart werden.

Aufgrund der vorstehend genannten Vorteile im Zusammenhang mit der Beschichtung von Wärmedämmplatten wird ferner ein Wärmedämmverbundsystem beansprucht, das unter Verwendung einer erfindungsgemäßen Beschichtungsmasse hergestellt wurde. Gegenstand der Erfindung ist demnach auch ein Wärmedämmverbundsystem, das wenigstens eine Wärmedämmplatte umfasst, die mit einer erfindungsgemäßen Beschichtungsmasse beschichtet ist.

## Patentansprüche

1. Viskose, kornhaltige aushärtende Beschichtungsmasse zur Ausbildung einer ein- oder mehrschichtigen Putzschicht und zum maschinellen Auftragen auf einen Untergrund, insbesondere auf eine bauseits angebrachte Wärmedämmplatte zur Herstellung eines Wärmedämmverbundsystems,
**dadurch gekennzeichnet, dass**
die Beschichtungsmasse eine Zusammensetzung aufweist, die Zellulosefasern mit einer Faserdicke von 2 bis 50 µm und einer maximalen Faserlänge ≤2000 µm, vorzugsweise ≤1000 µm als Verstärkungsfasern und/oder Glasfilamente mit einer Schnittlänge von 1 bis 10 mm, vorzugsweise 4 bis 7 mm als Verstärkungsfasern umfasst,
| | |
|---|---|
| 30 - 75 Massen% | Füllstoffe, wie beispielsweise Karbonate, Magnesiumhydrosilikate, Schichtsilikate und/oder Bariumsulfate, in einer Kornverteilung mit einer maximalen Korngröße ≤250 µm, weiterhin vorzugsweise ≤150 µm, |
| 5 - 30 Massen% | organische und/oder anorganische Bindemittel, wie beispielsweise Polymerdispersion, Dispersionspulver, Zement, Wasserglas und/oder Kalkhydrat, |
| 5 - 45 Massen% | Wasser, |
| 0,3 - 25 Massen% | verschiedener Additive, wie beispielsweise Filmbildner, Entschäumer, Thixotropier-, Hydrophobierungs-, Netz-, Flammschutz- und/oder Konservierungsmittel sowie |
| ≤ 4 Massen% | organische und/oder anorganische Verstärkungsfasern, wie beispielsweise Zellulosefasern und/oder Glasfilamente |
umfasst, so dass eine derart feinkörnige Beschichtungsmasse entsteht, die über ein druckluftlos zerstäubendes Spritzverfahren austragbar ist.

2. Beschichtungsmasse nach Anspruch 1, **dadurch gekennzeichnet, dass** die Beschichtungsmasse durch Einlegen eines Armierungsgewebes zur Herstellung einer Armierungsschicht geeignet ist.

3. Beschichtungsmasse nach einem der vorhergehenden Ansprüche, **dadurch gekennzeichnet, dass** die Beschichtungsmasse zur Ausbildung wenigstens zwei aufeinanderfolgender Schichten nass in nass verarbeitbar ist.

4. Beschichtungsmasse nach einem der vorhergehenden Ansprüche, **dadurch gekennzeichnet, dass** die Beschichtungsmasse zur Ausbildung von Einzelschichten in einer Schichtstärke ≤1,0 mm, beispielsweise zur Ausbildung einer Haftbrücke, und/oder zur Ausbildung einer ein- oder mehrschichtigen Beschichtung in einer Gesamtschichtstärke von ≥1,0 mm, vorzugsweise ≥1,5 mm geeignet ist.

5. Beschichtungsmasse nach einem der vorhergehenden Ansprüche, **dadurch gekennzeichnet, dass** die Beschichtungsmasse bei einem Maschinendruck von 80 bis 250 bar austragbar ist.

6. Verwendung einer Beschichtungsmassen nach einem der vorhergehenden Ansprüche zur Beschichtung eines Untergrundes, vorzugsweise einer bauseits angebrachten Trägerplatte, insbesondere einer Wärmedämmplatte, beispielsweise einer Wärmedämmplatte aus Polystyrol, insbesondere aus elastifiziertem Polystyrol, zur Herstellung eines Fassadensystems, wie beispielsweise eines Wärmedämmverbundsystems.

7. Wärmedämmverbundsystems umfass wenigstens eine Wärmedämmplatte, die mit einer Beschichtungsmasse nach einem der Ansprüche 1 bis 5 beschichtet ist.

## Claims

1. A viscous, granular, setting coating substance for forming a single or multi-layer plaster coat and for machine application to a base, in particular to a heat insulation board attached on site to produce a composite heat insulation system,
**characterized in that**
the coating substance has a composition comprising cellulose fibres having a fibre thickness from 2 to 50 µm and a maximum fibre length ≤ 2000 µm, preferably ≤ 1000 µm as reinforcing fibres and/or glass filaments having a cutting length from 1 to 10 mm, preferably 4 to 7 mm as reinforcing fibres,
| | |
|---|---|
| 30 - 75 % by weight | filling materials, for example carbonates, magnesium hydrosilicates, sheet silicates and/or barium sulphates, in a granular distribution with a maximum grain size ≤ 250 µm, furthermore preferably ≤ 150 µm, |
| 5 - 30 % by weight | organic and/or inorganic binding agents, for example polymer dispersion, polymer powder, cement, sodium silicate and/or slaked lime, |
| 5 - 45 % by weight | water, |
| 0.3 - 25 % by weight | various additives, for example film formers, antifoaming agents, thixotropic, hydrophobic, wetting, flame-protection |
| | and/or preserving agents and also |
| ≤ 4 % by weight | organic and/or inorganic reinforcing fibres, for example cellulose fibres and/or glass filaments, |
so that a coating substance is produced that is so finely grained that it can be applied using an atomizing spray method without the need for compressed air.

2. The coating substance according to claim 1, **characterized in that** the coating substance is suitable for creating a reinforcing coat by inserting a reinforcing fabric.

3. The coating substance according to one of the preceding claims, **characterized in that** the coating substance can be worked wet-on-wet to form at least two consecutive coats.

4. The coating substance according to one of the preceding claims, **characterized in that** the coating substance is suitable for forming individual coats with a coat thickness ≤ 1.0 mm, for example for forming a bonding coat and/or for forming a single or multi-layer coating with a total coating thickness ≥ 1.0 mm, preferably ≥ 1.5 mm.

5. The coating substance according to one of the preceding claims, **characterized in that** the coating substance can be applied at a machine pressure of 80 to 250 bar.

6. Use of a coating substance according to one of the preceding claims for coating a base, preferably a carrier board attached on site, particularly a heat insulation board, for example a heat insulation board made of polystyrene, particularly made of plasticized polystyrene, for creating a façade system such as a composite heat insulation system, for example.

7. A composite heat insulation system comprising at least one heat insulation board which is coated with a coating substance according to one of claims 1 to 5.

## Revendications

1. Masse de revêtement durcissable visqueuse, granuleuse, destinée à la création d'une couche d'enduit monocouche ou multicouches et à l'application mécanisée sur un support, notamment sur un panneau calorifuge monté dans un bâtiment pour la création d'un système de calorifugeage composite,
**caractérisée en ce que**
la masse de revêtement présente une composition, qui comprend en tant que fibres de renfort des fibres de cellulose d'une épaisseur de fibres de 2 à 50 µm et d'une longueur maximale des fibres < 2000 µm, de préférence ≤ 1000 µm et/ou en tant que fibres de renfort des filaments de verre d'une longueur de coupe de 1 à 10 mm, de préférence de 4 à 7 mm,
| | |
|---|---|
| de 30 à 75 % en masse | d'agents de charge, comme par exemple des carbonates, des hydrosilicates de magnésium, des phyllosilicates et/ou des sulfates de baryum selon une répartition granulométrique d'une granulométrie maximale ≤ 250 µm, de préférence par ailleurs ≤ 150 µm, |
| de 5 à 30 % en masse | de liants organiques et/ou anorganiques, comme par exemple une |
| | dispersion polymère, une poudre de dispersion, un ciment, un silicate de sodium et/ou un hydroxyde de calcium, |
| de 5 à 45 % en masse | d'eau |
| de 0,3 à 25 % en masse | de différents additifs, comme par exemple des agents filmogènes, des agents antimousse, des agents thixotropes, des agents hydrophobes, des agents mouillants, des agents ignifuges et/ou des conservateurs, ainsi que |
| ≤ 4 % en masse | de fibres de renfort organiques et/ou anorganiques, comme par exemple des fibres de cellulose et/ou des filaments de verre, |
de sorte à obtenir une masse de revêtement à grain si fin, qu'elle puisse être appliquée à l'aide d'un procédé de pulvérisation nébulisante, sans air comprimé.

2. Masse de revêtement selon la revendication 1, **caractérisée en ce que** par insertion d'un tissu d'armature, la masse de revêtement est adaptée pour fabriquer une couche d'armature.

3. Masse de revêtement selon l'une quelconque des revendications précédentes, **caractérisée en ce que** pour créer au moins deux couches successives, la masse de revêtement peut être mise en œuvre « humide dans humide ».

4. Masse de revêtement selon l'une quelconque des revendications précédentes, **caractérisée en ce que** la masse de revêtement est adaptée pour créer des couches individuelles d'une épaisseur de couche ≤ 1,0 mm, par exemple pour créer un pont d'adhérence et/ou pour créer un revêtement monocouche ou multicouches d'une épaisseur de couche totale ≥ 1,0 mm, de préférence ≥ 1,5 mm.

5. Masse de revêtement selon l'une quelconque des revendications précédentes, **caractérisée en ce que** la masse de revêtement est applicable à une pression de la machine de 80 à 250 bar.

6. Utilisation d'une masse de revêtement selon l'une quelconque des revendications précédentes pour le revêtement d'un support, de préférence d'un panneau porteur monté dans un bâtiment, notamment d'un panneau de calorifugeage, par exemple d'un panneau de calorifugeage en polystyrène, notamment en polystyrène élastifié pour la création d'un système de façades, comme par exemple un système de calorifugeage composite.

7. Système de calorifugeage composite comprenant au moins un panneau de calorifugeage qui est revêtu d'une masse de revêtement selon l'une quelconque des revendications 1 à 5.
